**Europäisches Patentamt**

**European Patent Office**

**Office européen des brevets**

(11) Publication number: **0 096 953**

**B1**

## (12) EUROPEAN PATENT SPECIFICATION

(45) Date of publication of patent specification: **30.12.86**

(21) Application number: **83301609.0**

(22) Date of filing: **23.03.83**

(51) Int. Cl.⁴: **E 06 C 7/12, B 66 B 9/20**

(54) Hoisting system.

(30) Priority: **25.03.82 GB 8208741**
**19.07.82 GB 8220881**

(43) Date of publication of application:
**28.12.83 Bulletin 83/52**

(45) Publication of the grant of the patent:
**30.12.86 Bulletin 86/52**

(84) Designated Contracting States:
**AT BE CH DE FR IT LI LU NL SE**

(56) References cited:
**CH-A- 92 786**
**FR-A-1 329 419**
**FR-A-1 502 163**
**FR-A-1 537 307**
**FR-A-2 038 496**
**FR-A-2 338 893**
**GB-A- 267 385**
**GB-A- 851 279**
**GB-A-1 000 555**
**US-A-2 459 621**
**US-A-3 053 344**
**US-A-3 428 145**
**US-A-3 666 054**
**US-A-3 962 616**
**US-A-4 234 834**

(73) Proprietor: **DEVITEC LIMITED**
**Oak Walk**
**St. Peter Jersey Channel Isles (GB)**

(72) Inventor: **Arnold, Paul Ernest Victor**
**33 St. Mary's Road**
**Ealing London, W5 5EU (GB)**

(74) Representative: **Corin, Christopher John et al**
**Mathisen Macara & Co. The Coach House 6-8**
**Swakeleys Road**
**Ickenham Uxbridge UB10 8BZ (GB)**

Courier Press, Leamington Spa, England.

## Description

This invention relates to a hoisting system comprising an electrically-driven hoist unit and a load-carrying trolley operably coupled to the hoist unit, the trolley being capable of running on the stiles of the ladder.

Hoist units and hoisting systems are commonly used on building sites involving large constructional works and these units and systems are complex and correspondingly costly. Various proposals have been made to provide less costly units and systems for smaller building sites, such as in US—A—3,428,145 and 3,666,054; FR—A—2,038,496, 2,390,371 and 1,502,163; and GB—A—851,279; 855,846 and 1,548,824 wherein a trolley is movable up and down a more or less standard builder's ladder. All these prior proposals suffer, however, from one or more disadvantages, of which the one common to all these proposals is the absence of a hoist power unit which is conveniently handled by one man and is of low bulk.

Some of the prior proposals involve the use of an internal-combustion engine and consequently have been inconvenient and unduly bulky for use on small building sites. Moreover, the requirement to provide mechanical reversing gear results in such a heavy unit that ladder mounting is difficult and mounting on the load-carrying trolley gives rise to the permanent disadvantage that when carrying a load upwardly, the power unit is required to lift its own, not inconsiderable, weight with obvious reduction in the useful load.

In more detail CH—A—92786 discloses a motor driven hoist unit including a hook which, when it reaches a predetermined position a switch in the motor circuit is actuated to cut off power from the motor to the capstan of the hoist. There is no suggestion that the hoist unit should be sufficiently compact that it could be fitted between the stiles of a conventional ladder nor is there any suggestion that the electric motor should be of any particular type.

US—A—3 666 054 discloses a trolley which can run on the stiles of a ladder but there is no suggestion that the trolley load should be raised by an electric motor, the manually operated capstan being such that if a reasonable load is to be lifted the rate of motion will be very slow indeed. Moreover, in order to fit the hoist unit in this prior proposal the ladder has to be specially adapted to give adequate access to the winding crank.

It is also desirable that the system shall be safe and foolproof in operation on sites where supervision is often less satisfactory than is desirable.

The main problem to be solved is the provision of a hoist unit and hoisting system which can be used on small building sites and which is of low-cost but safe and foolproof in operation.

The problem is solved by the provision of a hoisting system characterized in that the hoist unit is of a size such that it can fit through a space defined by adjacent rungs and the stiles of the ladder and comprises means which engage the front edge of the stiles in order to prevent the hoist unit from falling through the ladder and means for attaching the hoist unit to the ladder.

The invention will now be described, by way of example only, with reference to the accompanying diagrammatic drawings, in which:

Figure 1 is a side elevation of hoisting system in accordance with the invention;

Figure 2 is an elevation showing the wheels of a trolley of the hoisting system;

Figure 3 is a perspective view of a ramp assembly of the hoisting system;

Figure 4 is a perspective view of a hoist unit of the hoisting system;

Figure 4A is a side elevation of the unit of Figure 4;

Figure 4B is an inverted plan view of the unit of Figure 4;

Figure 5 is a circuit diagram of a control circuit for the motor of the unit of Figures 4, 4A and 4B;

Figure 6 is a side elevation of a modified form of trolley incorporating a safety device and illustrating the manner in which the device operates;

Figure 7 is a perspective view showing an assembly for mounting the hoist unit of Figures 4, 4A and 4B on a pole, such as a scaffolding pole; and

Figure 8 is a side elevation showing an assembly for mounting the hoist unit on a ladder to enable the unit to lift loads vertically without using a trolley.

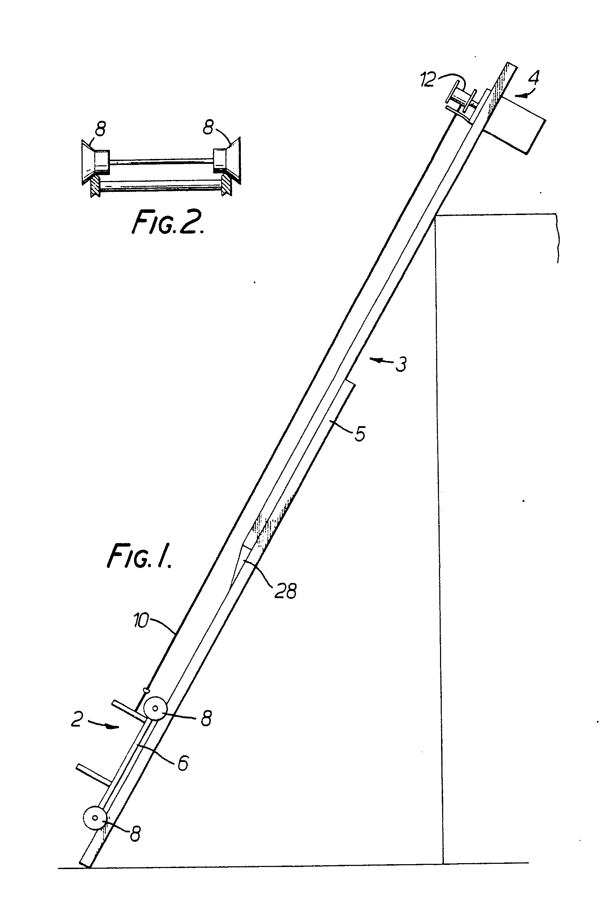

The hoisting apparatus shown in Figure 1 comprises a trolley 2 running on the stiles of a standard builders ladder 3 and a hoist unit 4 attached to the ladder at the upper end (or lower end) of the ladder so as to raise and lower the trolley 2 on the ladder. The trolley 2 comprises a load-carrying chassis 6 constructed of angle iron or tubular steel and supported by two pairs of wheels 8 which engage with the stiles 5 of the ladder as shown in Figure 2. The wheels 8 include outer, frusto-conical, flanges which lie externally of the stiles and ensure that the trolley is kept correctly aligned on the stiles. The wheels also comprise cylindrical portions of a width greater than that of the stiles, inwardly of the frusto-conical portions. Such wheels mean that the distance between the two stiles is not critical so that the trolley can be used with ladders of different widths (within certain limits). It will be noted that the wheels 8 of the trolley 2 run only along the front edges of the stiles, rather than along the front and rear edges of the stiles as would occur if the trolley were captive on the ladder; this enables the trolley to be used on extension ladders as will be described hereinafter. The chassis of the trolley may be covered with plywood or chipboard.

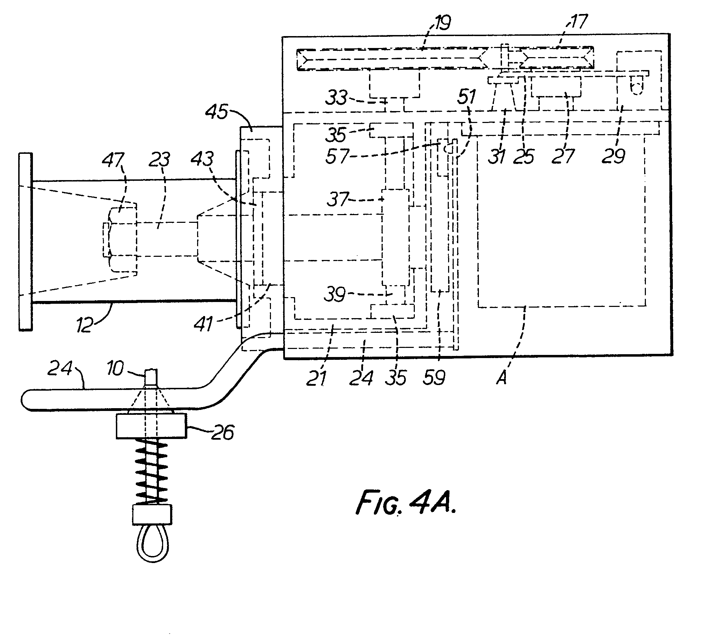

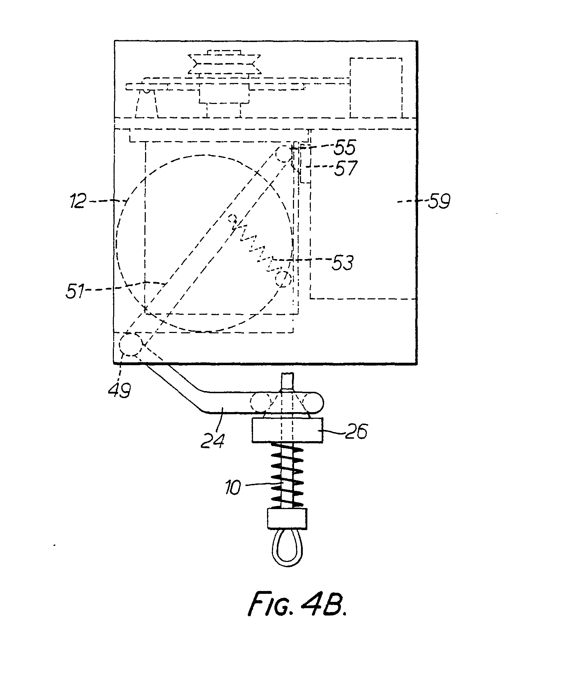

The trolley 2 is attached to a cable 10 which is wound around a capstan 12 of the hoist unit 4. As shown in Figure 4, the hoist unit 4 comprises a box-like housing 16 containing a power unit in the form of a DC electric motor. The housing 16 is of a size such that it can fit between the stiles and between two adjacent rungs of the ladder. The front side of the housing 16 is defined by a plate 18 which has a width greater than the distance between the stiles of a conventional builders ladder so that the plate 18 engages the front edge of the two stiles and prevents the hoist unit from falling through the ladder. At each of its two side edges the plate 18 carries a clamp 20 including a hook which can engage over the rear edge of the adjacent stile in order securely to clamp the hoist unit to the ladder with the aid of a wing nut 21. As will be apparent other suitable forms of clamping means could be used. The front plate 18 also carries a pair of lifting handles 22 to facilitate lifting of the hoist unit. The cable capstan 12 is rotatably mounted on the front plate 18 and the cable 10 passes to the capstan 12 via a bifurcated limit switch arm 24 which is raised by a boss 26 on the cable 10 when the trolley 2 is at an upper limit position whereby to stop the drive motor of the hoist by tripping a switch. The construction of the power unit of the hoist unit 4 will be described in detail hereinafter.

The hoist unit hereinbefore described may be used with a single length, that is non-extending, ladder or with an extending ladder where the front edges of the stiles of the extension ladder are substantially aligned with the front edge of the stiles of the main ladder. To enable the system to be used with extension ladders in which the front edges of the stiles of the extension ladder length are located in front of the front edges of the stiles of the main ladder length (as shown in Figure 1), a ramp assembly 28 is mounted on the ladder to provide a smooth transition for the trolley wheels 8 between the front edges of the two sets of stiles. As will be apparent, if the trolley had wheels along the front and rear edges of the stiles, the trolley could not accommodate the difference in effective depth which would be encountered during the transition between the main ladder length and the extension ladder length.

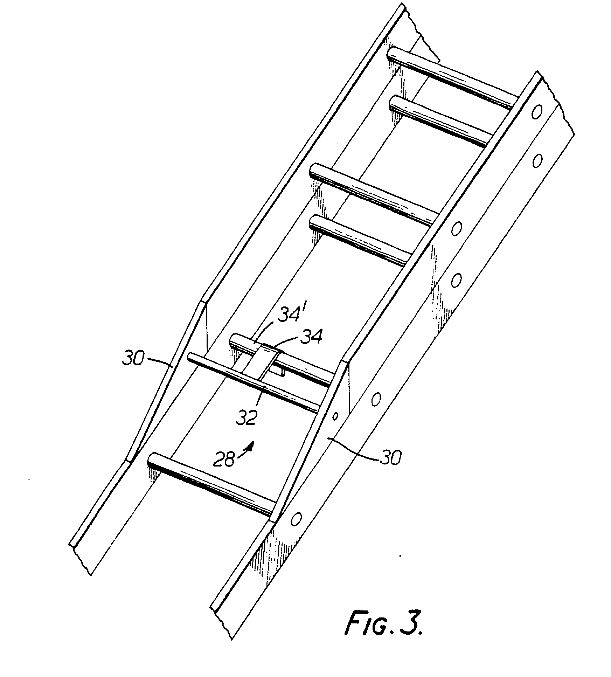

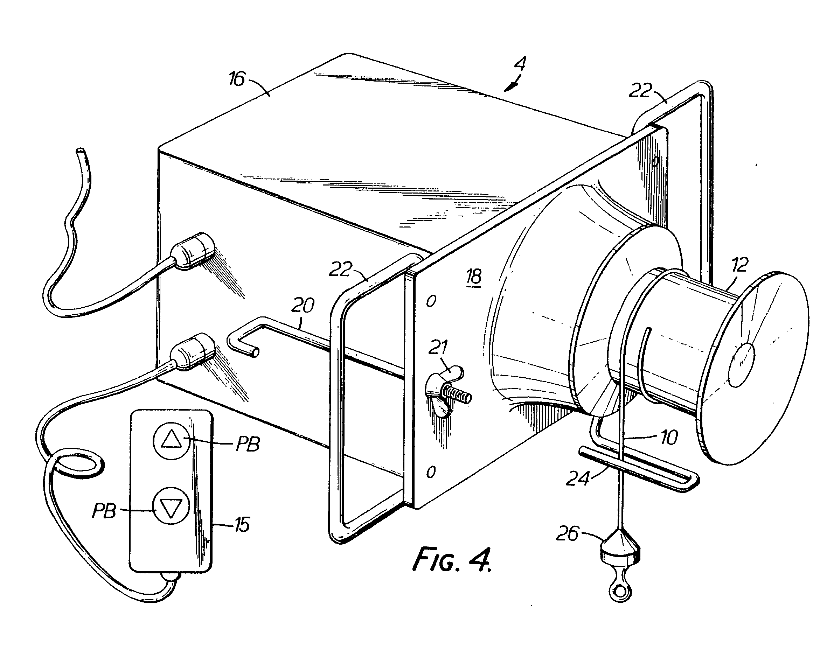

As shown in Figure 3 the ramp assembly 28 comprises two ramps 30 interconnected by at least one cross-bar 32. Each of the two ramps 30 is supported on the front edge of one of the stiles of the lower ladder length, the underside of each ramp being shaped to define a seat for the front edge of the stile in order to ensure that the ramp is readily located on the stile. A hook 34 carried by the cross-bar 32 engages over an adjacent rung 34' of the ladder to retain the ramp assembly 28 in position.

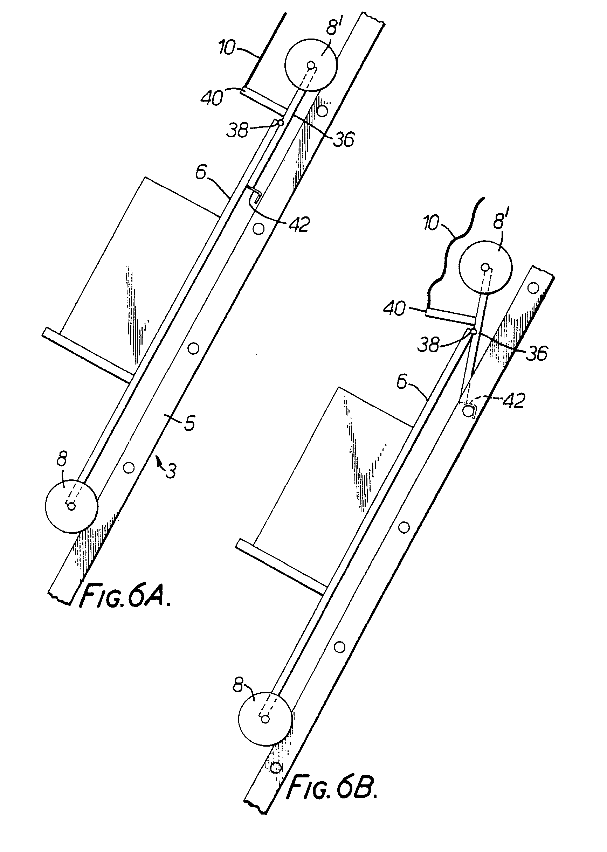

There is shown in Figures 6A and 6B a modified trolley 6 incorporating a safety device which prevents the trolley from running down the ladder in the event of the cable 10 breaking. The uppermost pair of wheels 8' of the trolley is mounted on a sub-assembly 36 which is pivotally attached to the main chassis 6 of the trolley. A bracket 40 extending away from the sub-assembly 36 laterally of the pivot is attached to the cable 10 and a downwardly-facing hook 42 is attached to the lower end of the sub-assembly 36 at the other side of the pivot axis. The normal condition of the trolley is shown in Figure 6A in which the tension in the cable 10 maintains the sub-assembly 36 in a position in which the hook 42 is clear of the rungs of the ladder. If the cable breaks, the component of the load acting on the trolley 6 acts to pivot the sub-assembly 36 into the position shown in Figure 6B in which the hook 42 moves away from main chassis 6 to engage an adjacent rung and thereby to prevent the trolley from running to the bottom of the ladder.

In a further modified trolley (not shown), the trolley wheels may each comprise an outer, frusto-conical, flange, and an inner, frusto-conical, flange which latter is intended to be positioned internally of the stile and is smaller than the outer flange, the two frusto-conical flanges of each wheel being arranged with their smaller bases adjacent. The inner frusto-conical flanges of the wheels act to provide more positive location of the trolley on the stiles if the wheels at one side of the trolley happen to lift from the stiles.

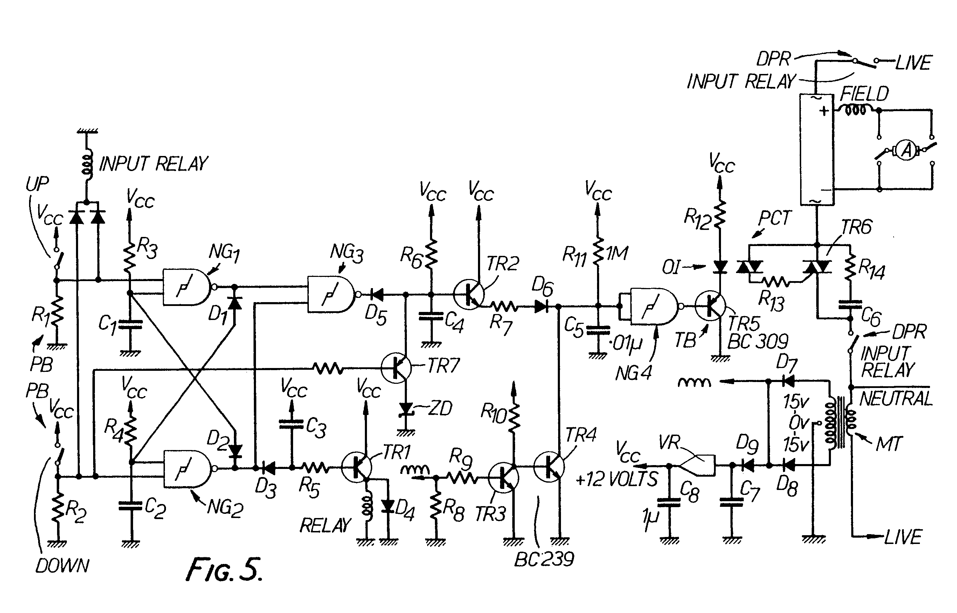

As described above, the main body of the hoist unit, that the box-like housing 16, is of a size to fit between the rungs and stiles of the ladder and it is necessary to devise a power unit which would be sufficiently compact to fit within this housing while being capable of delivering power to enable the trolley to carry an acceptable load. The power unit comprises a DC, reversible-brush, series wound motor A (Figs. 4, 4A, 4B and 5) from which power is transmitted via a V-belt reduction system 17, 19 (V-belt shown by chain line in Fig. 4A) to a worm and wheel gearbox 13. The V-belt reduction system is used because of its simplicity and ease of maintenance and the worm and wheel gearbox 13 provides the final speed reduction and carries the cable capstan 12 on its output shaft 23. The worm and wheel gearbox provides a self-locking non-reversible drive so that the trolley 6 can be stopped and locked in any selected position.

The hoist unit 16, has been described in outline and further detail will now be given in relation to Figures 4A and 4B which particularly demonstrate the compact nature of the unit as a whole. The motor A is mounted by a flange thereof on partition wall of the hoist unit and the output shaft carries the pulley 17 of the V-belt reduction system together with a brake assembly 25 which acts on an extension 27 of the pulley 17 under the action of a spring (not shown). The spring bias on the brake assembly is normally released by a solenoid 29 which thus acts in a "fail-safe" mode. The brake assembly is pivotally supported at one end of a bearing bush 31.

The driven pulley 19 of the V-belt reduction system is keyed to a wormwheel shaft 33 rotatably mounted in a bearing 35 carried by the partition wall of the hoist unit. The shaft 33 also carries a worm 37 which meshes permanently with a wormwheel 39 keyed to the output shaft 23. The output shaft 23 is rotatably supported in a bearing 41 which incorporates an oil seal 43. The gear box 21 has a cap 45 which serves to mount both the bearing 41 and the oil seal 43. The capstan 12 is retained on the output shaft 23 by a nut 47 and is made fast for rotation with the output shaft 23 by a key and keyway (not shown).

The limit switch arm 24 is rotatably mounted on a shaft which interconnects the outer, operative, part of the arm and an internal portion 51 which is biased by a tension spring 53 towards the lever 55 of a microswitch 57 forming part of the electronic circuit illustrated in Figure 5. The circuit board designated 59 is conveniently mounted between the gearbox and the motor.

Because of the large starting torque and large current surges associated with direct current switching, the motor A is controlled electronically. The electronic control system provides the necessary rectification to enable the motor to be powered from the mains. Also, so-called "soft starting" is incorporated to provide smooth acceleration and thereby prevent jerking of the trolley and load. A delay circuit is incorporated so that the motor cannot be suddenly reversed. All switching is effected electronically and at zero current so that the switching relays can be kept small and their life extended.

The combination of the DC series-wound motor A with electronic switching at zero current provides a very compact unit which can be fitted within the space available in the body of the hoist unit.

The hoist unit is controlled locally, or remotely by a control box 15 which operates at low voltage.

The control circuit for the motor A is shown in detail in Figure 5. The control circuit provides soft starting in both forward and reverse senses by utilizing a changeover relay in conjunction with a phase-controlled triac PCT. Timers ensure that the relay contacts never make or break the motor running current so avoiding arcing. The control box comprises two low-voltage push-buttons PB or rocker switches which are electrically isolated by a mains transformer MT and an opto-isolator OI (i.e. a device which provides an optical coupling between two electrical circuit, no electrical coupling being provided). DC control voltage $V_{cc}$ which is applied at various points in the circuit as shown in Figure 5, is derived from the mains supply via transformer MT and a voltage regulator VR (e.g. 78L12) and smoothing circuit including diodes $D_8$ and $D_9$ and capacitors $C_7$ and $C_8$.

The push-buttons PB are connected to separate NAND gates, $NG_1$, $NG_2$ in practice forming parts of a single integrated circuit. If the output of either of these NAND gates goes low then a soft start will begin. Components $R_3$, $C_1$ and $D_2$ form a timer which inhibits an "UP" command during, and for a short period after, a "DOWN" command has been operating. Similarly $R_4$, $C_2$ and $D_1$ form a timer which inhibits a "DOWN" command during, and for a short period after a "UP" command has been operating. The timers ensure that the motor is stationary before it is driven in the opposite sense.

The output of the "DOWN" NAND gate $NG_2$ is connected via diode $D_3$ and resistor $R_5$ to a transistor $TR_1$ which controls the reversing relay. Resistor $R_5$ and capacitor $C_3$ ensure that the relay remains in the reverse position for a short period after a "DOWN" command has been removed. This ensures that the relay contacts do not open when the motor A is still running.

The outputs of the first two NAND gates $NG_1$ and $NG_2$ are fed to a third NAND gate $NG_3$. If the output of this gate goes high then capacitor $C_4$ is allowed to charge via resistor $R_6$. The rising voltage on capacitor $C_4$ is buffered by transistor $TR_2$, and is fed via resistor $R_7$ and diode $D_6$ to capacitor $C_5$. $C_5$ is also charged via resistors $R_8$, $R_9$, $R_{10}$ and $R_{11}$. Transistors $TR_3$ and $TR_4$ are driven from the rectified but unsmoothed supply, and cause capacitor $C_5$ to be rapidly discharged each time the mains voltage passes through zero. $C_5$ is connected to further NAND gate $NG_4$ which actuates a threshold detecting transistors $TR_5$, which causes the light emitting diode of the opto-isolator OI to emit light and so cause opto-coupled triac PCT to conduct when the voltage at its input exceeds approximately 8 volts. The opto-coupled triac in turn controls transistor $TR_6$ which directly regulates the motor current.

When neither control button PB is pressed, $C_5$ is charged via $R_{11}$ during each half cycle of mains voltage, and discharged by $TR_4$ at each zero crossing point. The values of $R_{11}$ and $C_5$ are chosen to ensure that the voltage on $C_5$ only reaches approximately 5 volts during each half cycle. Typical values are $R_{11}=1$ Mohm and $C_5=0.1$ microfarad. Consequently the threshold voltage of the NAND gate $NG_4$ is not reached, and therefore the triac is not triggered. When a control push-button PB is pressed, $C_4$ is allowed to charge over a period of a few seconds. The combined charge currents derived from $R_{11}$ and $TR_2$ cause $C_5$ to charge to a higher voltage during each subsequent half cycle, and in turn cause the triac to be triggered earlier in each half cycle, so progressively applying power to the motor. In the downwards direction this voltage is limited to a set value via $TR_7$ and Zener diode ZD to limit the power of the motor A. The action of the $TR_4$ ensures that the soft start is synchronized with the mains frequency, so avoiding the "skipping" effect characteristic of very simple phase controls.

A double-pole relay DPR is incorporated in the high voltage supply to the triac circuit. This relay is energized when either of the control buttons PB is pressed so allowing power to be supplied to the triac circuit. This prevents the triac PCT being triggered by transients in any mains supply and also ensures that the motor stops even if the triac should fail.

Suitable values of the components are as follows:—

$R_1=R_2=1K5$ ohms,
$R_6=330K$ ohms,
$R_7=1K$ ohm,

$R_8 = R_9 = 10K$ ohm,
$R_{10} = 47K$ ohm,
$R_{12} = 680$ ohm,
$R_{13} = 270$ ohm,
$R_{14} = 330$ ohm,
$C_1 = C_2 = C_3 = C_8 = 1$ microfarad,
$C_4 = 10$ microfarad,
$C_6 = 0.01$ microfarad and
$C_7 = 20$ microfarad.

Transistors $TR_1$ may be $MPSA_{63}$ and transistors $TR_2$ and $TR_3$ $BC_{239}$ and transistor $TR_7$ $BC_{309}$. Opto-isolator OI may be $MOC_{3021}$.

Although the hoist unit hereinbefore described is primarily designed for use as part of a ladder-mounted hoisting apparatus, the hoist unit can also be used as a scaffold-mounted unit. The hoist unit is self-contained and the compact nature of its construction provided by using a DC series wound motor with electronic switching, means that the hoisting unit can be lifted by one man is therefore advantageous over conventional scaffold-mounted hoist units which are based on petrol driven engines and thus very bulky. To enable the hoist unit to be mounted on scaffolding, the handles 22 may be removable handles replaceable by clamping sleeves or other clamping means which can be used to clamp the unit onto scaffolding poles. The replaceable handles and clamping means may simply be bolted to the front plate of the hoisting unit.

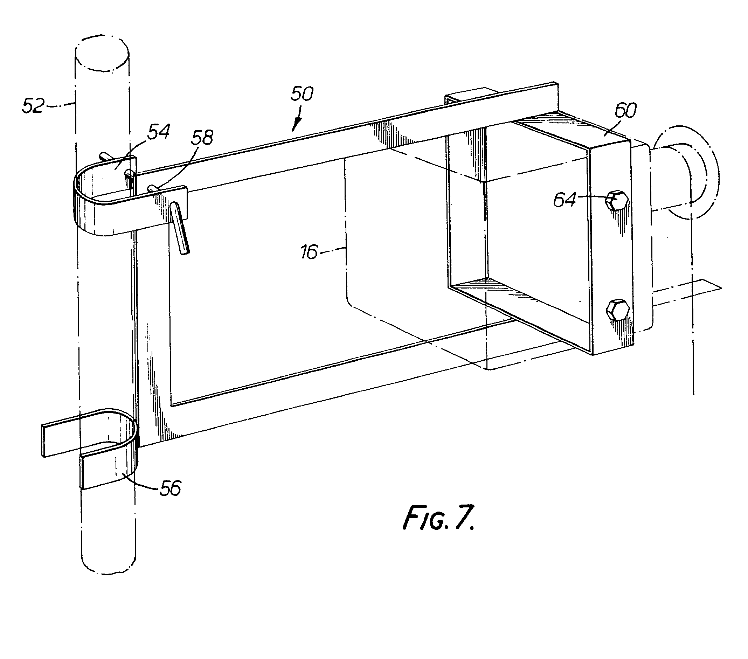

A bracket assembly for mounting the hoisting unit on a single vertical pole or other elongate member such as a scaffolding pole, is shown in Figure 7. The assembly comprises an arm 50 mounted at its inner end on a pole 52 by means of upper and lower oppositely-directed U-shaped yokes 54, 56 which hook onto the pole. The lower yoke 56 is permanently attached to the arm 50 and the upper yoke 54 is releasably attached to the arm by means of a pin 58; this releasable attachment enables the upper yoke to be hooked onto the pole without being impeded by the arm 50. In an alternative arrangement the arm may be permanently attached to one of the limbs of the upper yoke. A scaffolding clamp (not shown) is positioned beneath the lower yoke to retain the assembly at a selected height.

The free end of the arm 50 carries a rigid rectangular strap 60 which surrounds the main body 16 of the hoist unit. The strap 60 is releasably secured to the main body of the hoisting unit for example by means of bolts or screws 64.

As will be seen from Figure 7, the hoisting unit is cantilever mounted from the pole by means of the bracket assembly. The bracket assembly can be swivelled around the axis of the pole in order to displace the hoisting unit which can therefore act as a miniature crane to swing in and out of a loading platform.

The arm 50 may be of adjustable length, or the assembly may comprise a number of interchangeable arms, each of a different length.

The assembly may be mounted on an adjustable length pole, such as an "Acrowprop".

Such a prop may be mounted between two floors of a building, or within a window or door opening, to enable the assembly to be used without the need for scaffolding.

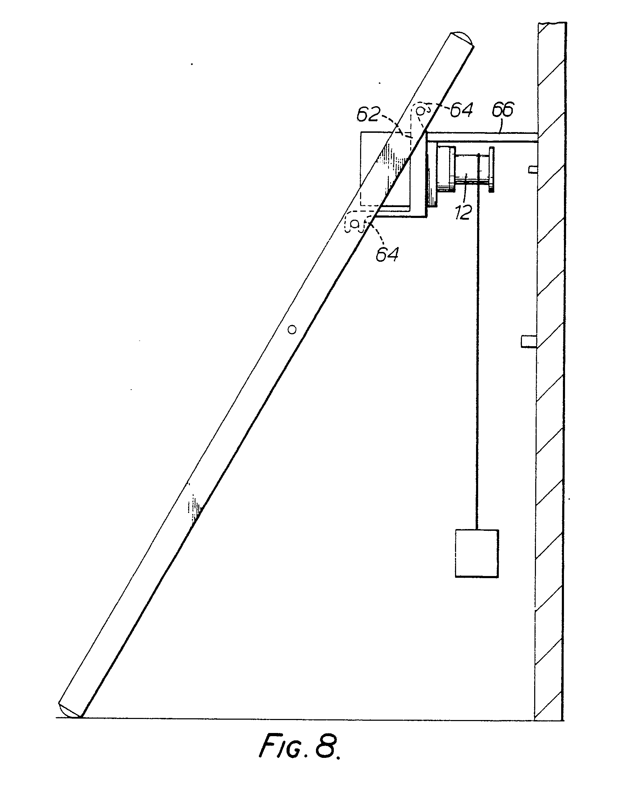

A bracket assembly for mounting the hoist unit on an inclined ladder, so that the capstan 12 projects horizontally to the rear of the ladder, is shown in Figure 8. This bracket assembly comprises two generally L-shaped arms 62 (only one of which is shown) on opposite sides of the main body of the hoist unit, the hoist unit being attached to the bracket assembly for example by means of bolts or screws (not shown). The vertical limbs of the two arms 62 may define the vertical sides of the rigid rectangular strap, similar to the strap 60 of Figure 7.

Hooks 64 are formed at the free end of each limb of the L-shaped arms 62. The hooks 64 engage with the rungs of the ladder to secure the bracket assembly to the ladder. The arms 62 are spaced by a distance which enables them to lie between the two stiles of the ladder.

When the hoist unit is mounted by the bracket assembly of Figure 8, the capstan projects rearwardly of the ladder to raise and lower a load vertically, for example along the vertical face of a building and adjacent a window opening.

The bracket assembly may be provided with one or more horizontally-directed support arms 66 to hold the ladder away from the wall; the support arm(s) 66 may be removably attached to the bracket assembly.

A further modified form of trolley (not shown), for use with extending ladders of the type in which the stiles of the extension ladder fit between the stiles of the main ladder but project forwardly of the front edges of the main ladder stiles, comprises wheels each with small and large diameter portions which are axially offset. The large diameter portion is designed to run along the main ladder stile, and the small diameter portion is designed to run along the extension ladder stile. The difference in radius between the two portions of the wheel corresponds to the distance by which the front edge of the extension ladder stile projects from the front edge of extension ladder stile. Therefore the transition of the wheel between the two stiles occurs runs smoothly and without the need for a ramp.

Trolleys for use with the ladder mounted hoist are so designed that, when loaded, the centre of gravity will lie between vertical planes containing the axes of the wheels, so that the load will act to keep the wheels in engagement with the ladder stiles.

Generally speaking, ladders tend to be of a standard size as regards rung spacing which means that a single size hoist unit can be constructed in accordance with the invention to fit most commercially available ladders.

**Claims**

1. A hoisting system comprising an electrically-driven hoist unit (4) and a load-carrying trolley (2) operably coupled to the hoist unit, the trolley being capable of running on the stiles (5) of the ladder (3), characterized in that the hoist unit is of a size such that it can fit through a space defined by adjacent rungs (34') and the stiles (5) of the ladder and comprises means (18) which engage the front edge of the stiles (5) in order to prevent the hoist unit from falling through the ladder and means (20) for attaching the hoist unit to the latter.

2. A hoisting system according to claim 1, characterized in that the trolley (2) includes wheels (8) which can engage only with the front edge portion of each stile (5).

3. A hoisting system according to claim 1 or claim 2 characterized by ramps (30) which can be mounted on the ladder to provide a smooth transition for the trolley (2) between the stiles (5) of a main ladder length and the stiles of an extension ladder length.

4. A hoistingg system according to any one of claims 1 to 3 characterized by a device (42) arranged automatically to engage a rung (34') of the ladder upon breakage of a cable (10) of the hoist unit of the system.

5. A hoisting system according to any of claims 1 to 3, characterized in that the hoist unit is a self-contained unit comprising a series-wound DC (A) motor with an electronic, zero-current, logic-controlled switching circuit (Fig. 5) and a cable capstan (12) coupled to the motor.

6. A system according to claim 5 characterized in that the motor is a reversible-brush motor and the circuit incorporates soft-starting means ($NG_1$, $NG_2$ etc).

7. A system according to claim 5 or claim 6 characterized by timer means ($R_3$, $C_1$, $D_2$) in the circuit arranged to ensure that relay contacts do not make or break while the motor (A) is running.

8. A system according to claim 5, claim 6 or claim 7 characterized by means ($TR_7$, ZD) serving to limit the power of the motor in one sense of rotation thereof.

9. A system according to any one of claims 5 to 8, characterized by a triac (PCT) in the motor circuit and means (DPR) to prevent firing of the triac by transient mains voltages.

10. A system according to any of claims 4 to 9, characterized by a limit switch (57) arranged to cooperate with the cable (12) to control the motor of the hoist unit and thereby limit winding of the cable.

11. A system according to claim 10 characterized in that the limit switch (57) is controlled by an arm (24) which acts as a cable restrainer whereby to restrain the end portion of the cable when the cable (12) is detached from the load and is approaching its fully wound position.

12. A hoisting system according to any one of claims 5 to 11, characterized in that the cable capstan (12) is rotatable about an axis substantially at right angles to the parallel planes containing the stiles.

13. A hoisting system according to any one of claims 1 to 12, characterized in that the trolley (2) comprises two pairs of wheels (8) so located that when loaded the centre of gravity of the trolley will lie between vertical planes containing the axes of the wheels so that the load will act to keep the wheels in engagement with the stiles.

14.. A self-contained, power-driven, hoist unit characterized by a bracket assembly (50) for cantilever mounting of the hoist unit from an elongate vertical member (52), said bracket assembly comprising an arm, means (54, 56, 58), in form of upper and lower oppositely directed U-shaped yokes for attaching one end of the arm to the elongate member (52) such that the arm can be angularly adjusted around the longitudinal axis of the elongate member and means (60, 64) for attaching the hoist unit to the other end of the arm.

15. A self-contained, power-driven, hoist unit characterized by a capstan (12) and a bracket assembly (62) comprising hooks (64) for attaching the hoist unit to two adjacent rungs of an inclined ladder (3) such that the capstan (12) extends rearwardly of the ladder with the axis of rotation thereof extending substantially horizontally, the hoist unit and bracket assembly being of a size such as to fit in the space between two stiles and two adjacent rungs of a ladder.

**Patentansprüche**

1. Hebezeug mit einer elektrisch angetriebenen Hebewerkseinheit (4) und einer die Last tragenden Laufkatze (2), die betriebsmäßig mit der Hebewerkseinheit verbunden ist, wobei die Laufkatze auf den Seitenteilen (5) der Leiter (3) laufen kann, dadurch gekennzeichnet, daß die Hebewerkseinheit von einer solchen Größe ist, daß sie durch den Zwischenraum paßt, der durch benachbarte Sprossen (34') und die Seitenteile (5) der Leiter definiert ist, und Mittel (18), die mit der Vorderkante der Seitenteile (5) in Eingriff gelangen, um die Hebewerkseinheit am Hindurchfallen durch die Leiter zu hindern, sowie Mittel (20) zum Befestigen der Hebewerkseinheit an letzterer aufweist.

2. Hebezeug nach Anspruch 1, dadurch gekennzeichnet, daß die Laufkatze (2) Räder (8) enthält, die nur mit dem Vorderkantenabschnitt jedes Seitenteiles (5) in Eingriff gelangen können.

3. Hebezeug nach Anspruch 1 oder 2, gekennzeichnet durch Rampen (30), die an der Leiter anbringbar sind, um für die Laufkatze (2) einen glatten übergang zwischen den Seitenteilen (5) einer Hauptleiterlänge und den Seitenteilen eine Verlängerungsleiterlänge vorzusehen.

4. Hebezeug nach einem der Ansprüche 1 bis 3, gekennzeichnet durch eine Einrichtung (42) die angeordnet ist, um bei Bruch eines Seiles (10) Hebewerkseinheit des Hebezeugs automatisch mit einer Sprosse (34') der Leiter in Eingriff zu gelangen.

5. Hebezeug nach einem der Ansprüche 1 bis 3, dadurch gekennzeichnet, daß die Hebewerkseinheit eine in sich geschlossene Einheit ist, die einen Hauptschluß-Gleichstrommotor (A) mit einem elektronischen Logik-gesteuerten Nullstrom-Schaltnetzwerk (Fig. 5) und eine mit dem Motor gekuppelte Seilwinde (12) aufweist.

6. Hebezeug nach Anspruch 5, dadurch gekennzeichnet, daß der Motor ein Umkehrbürstenmotor ist und das Netzwerk Mittel ($NG_1$, $NG_2$ etc.) für ein weiches Anlaufen enthält.

7. Hebezeug nach Anspruch 5 oder Anspruch 6, gekennzeichnet durch Zeitgebermittel ($R_3$, $C_1$, $D_2$) im Netzwerk, die eingerichtet sind, um sicherzustellen, daß Relaiskontakte keinen Kontakt herstellen oder unterbrechen, während der Motor (A) läuft.

8. Hebezeug nach Anspruch 5, Anspruch 6 oder Anspruch 7, gekennzeichnet durch Mittel ($TR_7$, ZD), die zur Begrenzung der Leistung des Motors in einer Drehrichtung desselben dienen.

9. Hebezeug nach einem der Ansprüche 5 bis 8, gekennzeichnet durch ein Triac (PCT) im Motornetzwerk und Mittel (DPR), um ein Zünden des Triacs bei Netzstörspannungen zu verhindern.

10. Hebezeug nach einem der Ansprüche 4 bis 9, gekennzeichnet durch einen Grenzschalter (57), der eingerichtet ist, um mit dem Seil (10) zusammenzuarbeiten, um den Motor der Hebewerkseinheit zu steuern und dadurch das Aufwickeln des Seils zu begrenzen.

11. Hebezeug nach Anspruch 10, dadurch gekennzeichnet, daß der Grenzschalter (57) durch einen Arm (24) gesteuert ist, der als Seilbremse wirkt, wodurch der Endabschnitt des Seils angehalten wird, wenn das Seil (10) von der Last gelöst wird und sich seiner voll aufgewickelten Lage nähert.

12. Hebezeug nach einem der Ansprüche 5 bis 11, dadurch gekennzeichnet, daß die Seilwinde (12) um eine Achse drehbar ist, die im wesentlichen rechtwinkelig zu den die Seitenteile enthaltenden parallelen Ebenen verläuft.

13. Hebezeug nach einem der Ansprüche 1 bis 12, dadurch gekennzeichnet, daß die Laufkatze (2) zwei Paare Räder (8) aufweist, die so angeordnet sind, daß bei Belastung der Schwerpunkt der Laufkatze zwischen vertikalen Ebenen liegen wird, die die Achsen der Räder enthalten, so daß die Last wirkt, um die Räder in Eingriff mit den Seitenteilen zu halten.

14. In sich geschlossene Hebewerkseinheit mit eigenem Kraftantrieb, gekennzeichnet durch eine Lagerträgereinheit (50) für eine Auslegeranbringung der Hebewerkseinheit an einem länglichen vertikalen Teil (52), welche Kragträgereinheit einen Arm, Mittel (54, 56, 58) in Form oberer und unterer, entgegengesetzt gerichteter U-förmiger Joche zur Befestigung eines Endes des Armes am länglichen Teil (52) derart, daß der Arm um die Längsachse des länglichen Teiles herum winkelmäßig eingestellt werden kann, und Mittel (60, 64) zum Befestigen der Hebewerkseinheit am anderen Ende des Armes aufweist.

15. In sich geschlossene Hebewerkseinheit mit eigenem Kraftantrieb, gekennzeichnet durch eine Winde (12) und eine Lagerträgereinheit (62) mit Haken (64) zur Befestigung der Hebewerkseinheit an zwei benachbarten Sprossen einer schräggestellten Leiter (3) derart, daß sich die Winde (12) rückwärts von der Leiter erstreckt, wobei ihre Drehachse im wesentlichen horizontal verläuft, wobei die Hebewerkseinheit und die Lagerträgereinheit eine solche Größe haben, daß sie in den Zwischenraum zwischen zwei Seitenteilen und zwei benachbarten Sprossen einer Leiter passen.

**Revendications**

1. Système de levage comprenant une unité de treuil (4) à entraînement électrique et un chariot porteur de charge (2) couplé activement à l'unité de treuil, le chariot étant capable de circuler sur les montants (5) de l'échelle (3), caractérisé en ce que l'unité de treuil a une dimension telle qu'elle peut s'adapter à travers un espace défini par des barreaux adjacents (34') et les montants (5) de l'échelle, et comprend des moyens (18) qui engagent le bord avant des montants (5) afin d'empêcher l'unité de treuil de tomber à travers l'échelle et des moyens (20) pour la fixation de l'unité de treuil à cette dernière.

2. Système de levage suivant la revendication 1, caractérisé en ce que le chariot (2) comprend des roues (8) qui ne peuvent engager que la partie de bord avant de chaque montant (5).

3. Système de levage suivant la revendication 1 ou la revendication 2, caractérisé par des rampes (30) qui peuvent être montées sur l'échelle pour offrir une transition uniforme pour le chariot (2) entre les montants d'une longueur d'échelle principale et les montants d'une longueur d'échelle à coulisse.

4. Système de levage suivant l'une quelconque des revendications 1 à 3, caractérisé par un dispositif (42) agencé pour engager automatiquement un barreau (34') de l'échelle lors d'une rupture d'un câble (10) de l'unité de treuil du système.

5. Système de levage suivant l'une quelconque des revendications 1 à 3, caractérisé en ce que l'unité de treuil est une unité autonome comprenant un moteur série à courant continu (A) avec un circuit de commutation électronique à courant nul, commandé logiquement (Fig. 5), et un cabestan à câble (12) couplé au moteur.

6. Système suivant la revendication 5, caractérisé en ce que le moteur est un moteur à balais réversibles et le circuit comprend des moyens de démarrage doux ($NG_1$, $NG_2$, etc).

7. Système suivant la revendication 5 ou la revendication 6, caractérisé par des moyens temporisateurs ($R_3$, $C_1$, $D_2$) dans le circuit, agencés de manière à assurer que des contacts de relais ne se ferment ou s'ouvrent pendant que le moteur (A) tourne.

8. Système suivant la revendication 5, la revendication 6 ou la revendication 7, caractérisé par des moyens ($TR_7$, ZD) servant à limiter la puissance du moteur dans un sens de rotation de celui-ci.

9. Système suivant l'une quelconque des revendications 5 à 8, caractérisé par un triac (PCT) dans le circuit de moteur et des moyens (DPR) pour empêcher le déclenchement du triac par des tensions transitoires du réseau.

10. Système suivant l'une quelconque des revendications 4 à 9, caractérisé par un commutateur de fin de course (57) agencé de manière à coopérer avec le câble (12) pour commander le moteur de l'unité de treuil et limiter ainsi l'enroulement du câble.

11. Système suivant la revendication 10, caractérisé en ce que le commutateur de fin de course (57) est commandé par un bras (24) qui agit en tant qu'élément de retenue de câble afin de retenir la partie d'extrémité du câble quand le câble (12) est détaché de la charge et s'approche de sa position d'enroulement complet.

12. Système de levage suivant l'une quelconque des revendications 5 à 11, caractérisé en ce que le cabestan à câble (12) peut tourner autour d'un axe pratiquement perpendiculaire aux plans parallèles contenant les montants.

13. Système de levage suivant l'une quelconque des revendications 1 à 12, caractérisé en ce que le chariot (12) comprend deux paires de roues (8) situées de telle sorte qu'en charge, le centre de gravité du chariot se situera entre des plans verticaux contenant les axes des roues, de telle sorte que la charge agira de manière à maintenir les roues en contact avec les montants.

14. Unité de treuil autonome à entraînement motorisé, caractérisé par un assemblage d'équerre (50) pour le montage en porte-à-faux de l'unité de treuil à partir d'un organe vertical allongé (52), ledit assemblage d'équerre comprenant un bras, des moyens (54, 56, 58) sous la forme d'etriers en forme de U supérieur et inférieur dirigés à l'opposé, pour la fixation d'une extrémité du bras à l'organe allongé (52) de telle sorte que le bras puisse être ajusté angulairement autour de l'axe longitudinal de l'organe allongé et des moyens (60, 64) pour la fixation de l'unité de treuil à l'autre extrémité du bras.

15. Unité de treuil autonome à entraînement motorisé, caractérisé par un cabestan (12) et un assemblage d'équerre (62) comprenant des crochets (64) pour la fixation de l'unité de treuil à deux barreaux adjacents d'une échelle inclinée (3), d'une manière telle que le cabestan (12) s'étende vers l'arrière de l'échelle avec son axe de rotation s'étendant pratiquement horizontalement, l'unité de treuil et l'assemblage d'équerre ayant une dimension telle qu'ils s'adaptent dans l'espace entre deux montants et deux barreaux adjacents d'une échelle.

FIG.2.

FIG.1.

FIG. 3.

FIG. 4.

FIG. 4A.

FIG. 4B.

Fig. 5.

FIG. 6A.

FIG. 6B.

FIG. 7.

FIG. 8.